# EUROPEAN PATENT APPLICATION

(11) **EP 1 986 357 A2**
(43) Date of publication of application: **29.10.2008**
(21) Application number: 08154843.0
(22) Date of filing: 21.04.2008
(51) Int. Cl.: H04H 60/37

(54) **Information processing apparatus and information processing method for detecting a commercial included in a television broadcast**

(30) Priority: 26.04.2007 JP 2007116767
(71) Applicant: Sony Corporation, Tokyo 108-0075 (JP)
(72) Inventor: Hirosawa, Koji, Tokyo 108-0075 (JP)
(74) Representative: Beder, Jens

(57) **Abstract**

An information processing apparatus detecting a commercial included in a television broadcast, the apparatus includes: a silent section detecting part detecting a silent section of the television broadcast; a scene change detecting part detecting a scene change of video of the television broadcast; a black screen/blue screen detecting part detecting that video of the television broadcast is a black or a blue screen; a potential chapter point detecting part detecting a potential chapter point indicating a reproduction start or end time of the commercial based on at least one of results by the detecting parts; and a deciding part determining whether a television broadcast between the potential chapter points is the commercial or a TV program based on the potential chapter points, and deciding a potential chapter point indicating a reproduction time instant changed from one of the commercial and the TV program to the other as the chapter points.

## Description

### CROSS REFERENCES TO RELATED APPLICATIONS

The present invention contains subject matter related to Japanese Patent Application JP 2007-116767 filed in the Japanese Patent Office on April 26, 2007, the entire contents of which being incorporated herein by reference.

### BACKGROUND OF THE INVENTION

### 1. Field of the Invention

The present invention relates to an information processing apparatus, an information processing method, a program, and a recording medium, particularly to an information processing apparatus, an information processing method, a program, and a recording medium, which can reliably detect a commercial included in a television broadcast.

### 2. Description of the Related Art

For example, there is a recording apparatus with a so-called CM skip function which fast-forwards or skips commercials (hereinafter, referred to as CMs) in response to user demands to desire to watch only a TV program when a recorded television broadcast is reproduced.

In such a recording apparatus, a predetermined CM detection algorithm detects a CM, stores the CM' s reproduction start time and reproduction end time as chapter points, and then reproduces the CM in fast forward instantaneously or at high speed based on the chapter points.

As a CM detection algorithm before, there is one that uses a threshold to determine the silent sections of a television broadcast for detecting CMs based on the determined results (for example, see Patent Reference 1 (JP-A-2000-165798)). In addition, for example, there is another CM detection algorithm that detects a section having CM characteristics as a CM, in consideration of these CM characteristics; the sound multiplexing mode of CMs is a stereo mode, there is a silent section for about 0.1 to 2.0 seconds at the start and end of individual CMs, the silent section has a scene change point at which video scenes are changed, and the duration of individual CMs is an integral multiple of 15 seconds.

Moreover, in television broadcasts in Europe and the United States, since there is a video frame of a black screen or a blue screen between a TV program and a CM, there is a CM detection algorithm that detects a section having this characteristic as a CM. In addition, hereinafter, the frame refers to a video frame unless otherwise noted particularly.

### SUMMARY OF THE INVENTION

However, in the CM detection algorithms before, for example, it is difficult for the algorithms to detect such CMs that do not include the characteristics described above like CMs whose sound multiplexing mode is a monophonic mode. Therefore, for example, in the case in which in Europe and the United States, the CM characteristics used for the CM detection algorithms before are changed or become obsolete, such as the change of the CM duration to an integral multiple of 14 seconds, or the abolishment of the frame insertion of the black screen or the blue screen between a TV program and a CM, the CM detection algorithms before may not detect any CMs.

In addition, in Europe, since the CM duration is not always an integral multiple of 15 seconds, it is difficult for the CM detection algorithms before to detect CMs, and in contrast to this, the algorithms wrongly detect CMs in the case in which a TV program includes the characteristic that the duration is an integral multiple of 15 seconds.

As discussed above, in order to reliably detect CMs, it is desirable that the CM characteristics used for the CM detection algorithms are universal regardless of television broadcasting regions, or the trends in future.

It is desirable to reliably detect CMs included in a television broadcast.

An information processing apparatus according to an embodiment of the invention is an information processing apparatus that detects a commercial included in a television broadcast, the information processing apparatus including: a silent section detecting part configured to detect a silent section of the television broadcast; a scene change detecting part configured to detect a scene change of video of the television broadcast; a black screen/blue screen detecting part configured to detect that video of the television broadcast is a black screen or a blue screen; a potential chapter point detecting part configured to detect a potential chapter point to be possibly a chapter point indicating a reproduction start time or a reproduction end time of the commercial based on at least one of a detected result done by the silent section detecting part, a detected result done by the scene change detecting part and a detected result done by the black screen/blue screen detecting part; and a deciding part configured to determine whether a television broadcast between the potential chapter points is the commercial or a TV program based on the potential chapter points, and to decide a potential chapter point indicating a reproduction time instant changed from one of the commercial and the TV program to the other as the chapter point in the potential chapter points.

In the information processing apparatus according to the embodiment of the invention, the potential chapter point detecting part may detect a reproduction time instant within the silent section at which the scene change is detected as the potential chapter point.

In the information processing apparatus according to the embodiment of the invention, when a plurality of reproduction time instants at which the scene change is detected exists within the single silent section, the potential chapter point detecting part may detect a single reproduction time instant in the plurality of the reproduction time instants as the potential chapter point.

In the information processing apparatus according to the embodiment of the invention, the potential chapter point detecting part may detect a reproduction time instant within the silent section at which the black screen or the blue screen is detected as the potential chapter point.

In the information processing apparatus according to the embodiment of the invention, when a plurality of reproduction time instants at which the black screen or the blue screen is detected exists within the single silent section, the potential chapter point detecting part may detect a single reproduction time instant in the plurality of the reproduction time instants as the potential chapter point.

In the information processing apparatus according to the embodiment of the invention, the potential chapter point detecting part may further detect a reproduction time instant within the silent section at which the scene change is detected as the potential chapter point.

In the information processing apparatus according to the embodiment of the invention, when a plurality of reproduction time instants at which the black screen or the blue screen is detected or a plurality of reproduction time instants at which the scene change is detected exist within a single silent section, the potential chapter point detecting part may detect a single reproduction time instant in the pluralities of the reproduction time instants as the potential chapter point.

In the information processing apparatus according to the embodiment of the invention, when a time period between the potential chapter points is longer than a predetermined time period, the deciding part may determine that a television broadcast between the potential chapter points is the TV program, whereas when a time period between the potential chapter points is equal to or shorter than a predetermined time period, the deciding part may determine that a television broadcast between the potential chapter points is the commercial.

In the information processing apparatus according to the embodiment of the invention, the silent section detecting part may use a threshold corresponding to a sound level of the television broadcast, and may detect a section with a sound level smaller than the threshold as the silent section.

In the information processing apparatus according to the embodiment of the invention, the silent section detecting part may set the threshold based on a minimum value of the sound level of the television broadcast.

An information processing method according to an embodiment of the invention is an information processing method of an information processing apparatus that detects a commercial included in a television broadcast, the method including the steps of: detecting a silent section of the television broadcast; detecting a scene change of video of the television broadcast; detecting that video of the television broadcast is a black screen or a blue screen; detecting a potential chapter point to be possibly a chapter point indicating a reproduction start time or a reproduction end time of the commercial based on at least one of a detected result of the silent section, a detected result of the scene change and a detected result of the black screen or the blue screen; and determining whether a television broadcast between the potential chapter points is the commercial or a TV program based on the potential chapter points, and deciding a potential chapter point indicating a reproduction time instant changed from one of the commercial and the TV program to the other as the chapter point in the potential chapter points.

A program and a program recorded on a recording medium according to an embodiment of the invention is a program that allows a computer to execute a process of detecting a commercial included in a television broadcast, the detecting process including the steps of: detecting a silent section of the television broadcast; detecting a scene change of video of the television broadcast; detecting that video of the television broadcast is a black screen or a blue screen; detecting a potential chapter point to be possibly a chapter point indicating a reproduction start time or a reproduction end time of the commercial based on at least one of a detected result of the silent section, a detected result of the scene change and a detected result of the black screen or the blue screen; and determining whether a television broadcast between the potential chapter points is the commercial or a TV program based on the potential chapter points, and deciding a potential chapter point indicating a reproduction time instant changed from one of the commercial and the TV program to the other as the chapter point in the potential chapter points.

In an embodiment of the invention, a silent section of a television broadcast is detected, a scene change of video of a television broadcast is detected, and it is detected that video of a television broadcast is a black screen or a blue screen. Based on at least one of the detected result of the silent section, the detected result of the scene change and the detected result of the black screen or the blue screen, a potential chapter point to be possibly a chapter point indicating a reproduction start time or a reproduction end time of the commercial is detected. It is determined whether a television broadcast between the potential chapter points is the commercial or a TV program based on the potential chapter points, and it is decided that a potential chapter point indicating a reproduction time instant changed from one of the commercial and the TV program to the other as the chapter point in the potential chapter points.

As discussed above, according to the embodiments of the invention, a commercial included in a television broadcast can be reliably detected.

### BRIEF DESCRIPTION OF THE DRAWINGS

Fig. 1 shows a block diagram depicting an exemplary configuration of an embodiment of a recording apparatus to which an embodiment of the invention is adapted;
Fig. 2 shows a block diagram depicting an exemplary configuration of a detailed chapter point detection circuit shown in Fig. 1;
Fig. 3 shows a diagram illustrative of the detection of potential chapter points;
Fig. 4 shows another diagram illustrative of the detection of potential chapter points;
Fig. 5 shows a diagram illustrative of the decision of chapter points;
Fig. 6 shows a flow chart illustrative of a recording process in the recording apparatus;
Fig. 7 shows a flow chart illustrative of a potential chapter point detecting process in the chapter point detection circuit;
Fig. 8 shows a flow chart illustrative of a chapter point deciding process in the recording apparatus; and
Fig. 9 shows a block diagram depicting an exemplary configuration of computer hardware.

### DETAILED DESCRIPTION OF THE INVENTION

Hereinafter, embodiments of the invention will be described. The following is examples of the correspondence between configuration requirements for the invention and the embodiments of the specification or the drawings. This is described for confirming that the embodiments supporting the invention are described in the specification or the drawings. Therefore, even though there is an embodiment that is described in the specification or the drawings but is not described herein as an embodiment corresponding to configuration requirements for the invention, it does not mean that the embodiment does not correspond to those configuration requirements. Contrary to this, even though an embodiment is described herein as an embodiment corresponding to configuration requirements, it does not mean that the embodiment does not correspond to configuration requirements other than those configuration requirements.

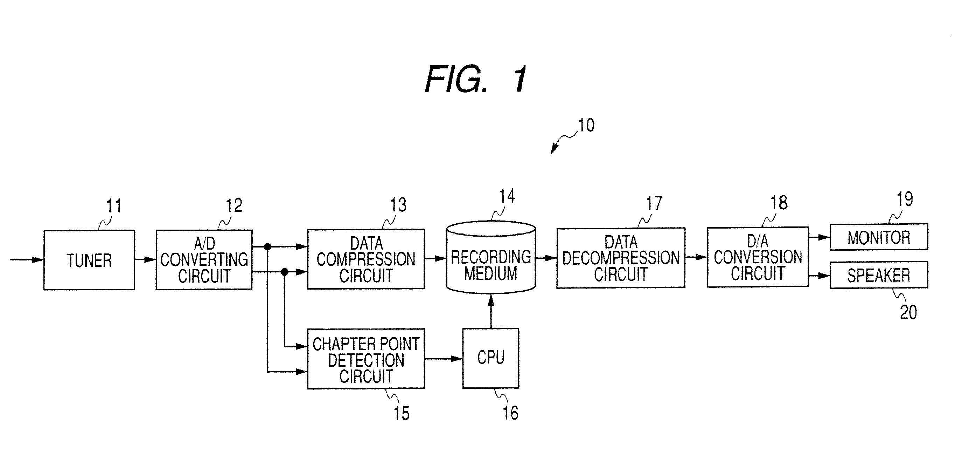

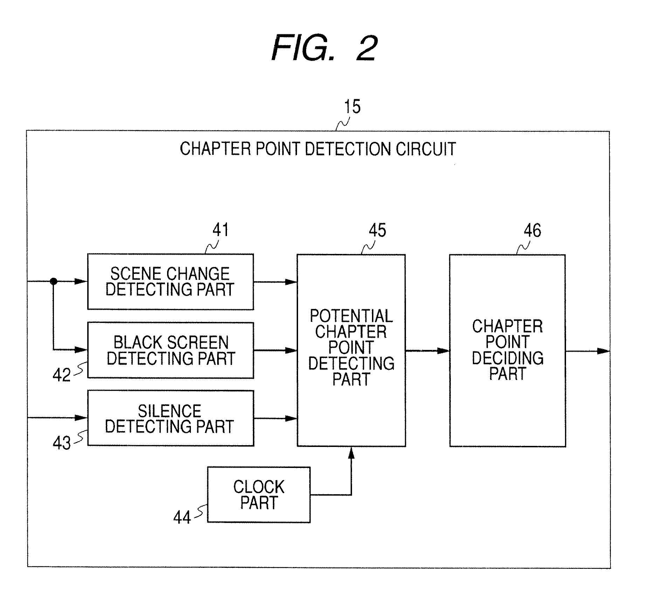

An information processing apparatus according to an embodiment of the invention is an information processing apparatus (for example, a recording apparatus 10 shown in Fig. 1) that detects a commercial included in a television broadcast, the information processing apparatus including: a silent section detecting part configured to detect a silent section of the television broadcast (for example, a silence detecting part 43 shown in Fig. 2); a scene change detecting part configured to detect a scene change of video of the television broadcast (for example, a scene change detecting part 41 shown in Fig. 2); a black screen/blue screen detecting part configured to detect that video of the television broadcast is a black screen or a blue screen (for example, a black screen detecting part 42 shown in Fig. 2); a potential chapter point detecting part configured to detect a potential chapter point to be possibly a chapter point indicating a reproduction start time or a reproduction end time of the commercial based on at least one of a detected result done by the silent section detecting part, a detected result done by the scene change detecting part and a detected result done by the black screen/blue screen detecting part(for example, a potential chapter point detecting part 45 shown in Fig. 2) ; and a deciding part configured to determine whether a television broadcast between the potential chapter points is the commercial or a TV program based on the potential chapter points, and to decide a potential chapter point indicating a reproduction time instant changed from one of the commercial and the TV program to the other as the chapter point in the potential chapter points (for example, a chapter point deciding part 46 shown in Fig. 2).

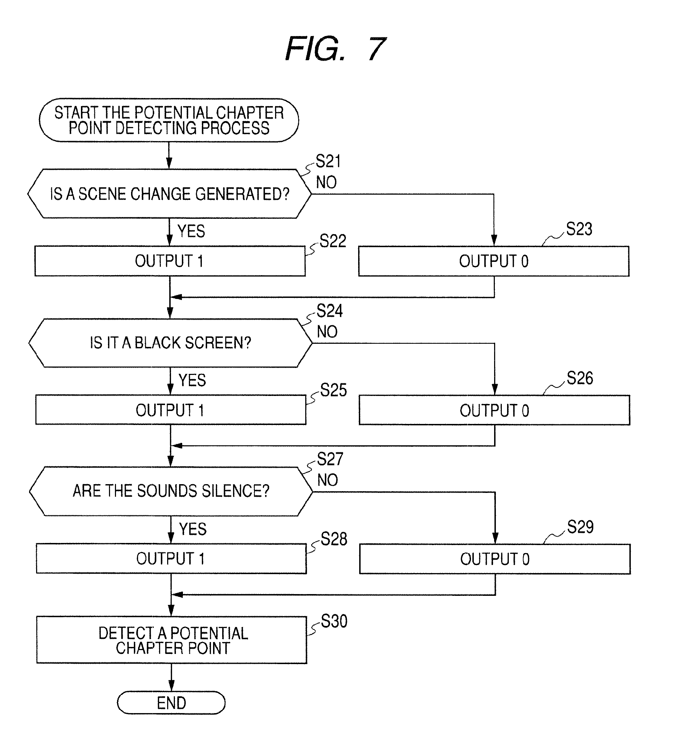

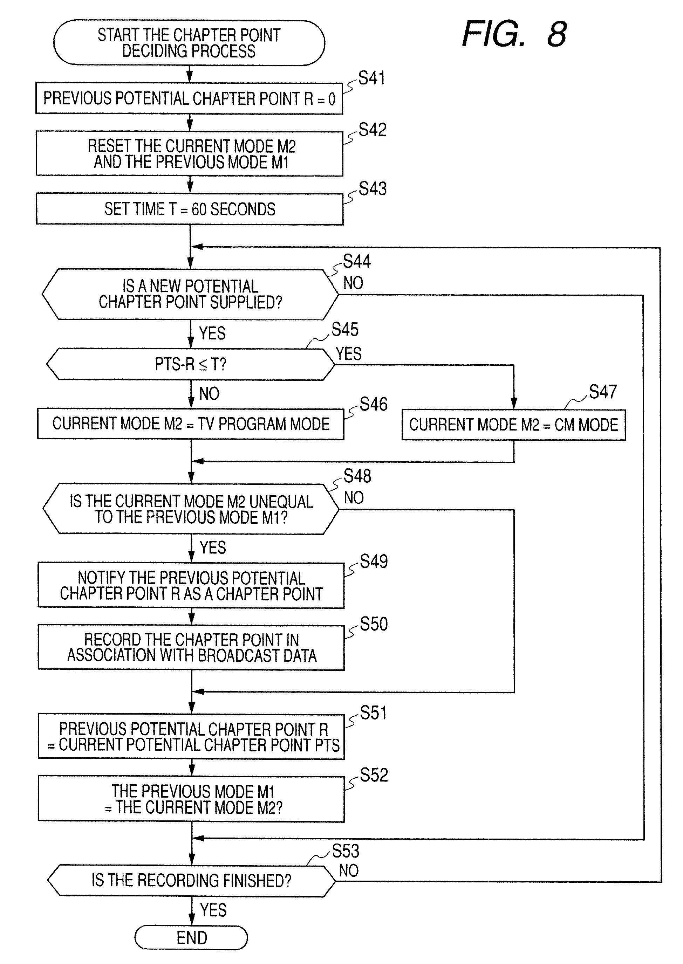

An information processing method according to an embodiment of the invention is an information processing method of an information processing apparatus (for example, the recording apparatus 10 shown in Fig. 1) that detects a commercial included in a television broadcast, the method including the steps of: detecting a silent section of the television broadcast (for example, Step S28 shown in Fig. 7) ; detecting a scene change of video of the television broadcast (for example, Step S22 shown in Fig. 7) ; detecting that video of the television broadcast is a black screen or a blue screen (for example, Step S25 shown in Fig. 7); detecting a potential chapter point to be possibly a chapter point indicating a reproduction start time or a reproduction end time of the commercial based on at least one of a detected result of the silent section, a detected result of the scene change and a detected result of the black screen or the blue screen (for example, in Step S30 shown in Fig. 7); and determining whether a television broadcast between the potential chapter points is the commercial or a TV program based on the potential chapter points, and deciding a potential chapter point indicating a reproduction time instant changed from one of the commercial and the TV program to the other as the chapter point in the potential chapter points (for example, Step S49 shown in Fig. 8).

Hereinafter, a specific embodiment to which an embodiment of the invention is adapted will be described in detail with reference to the drawings.

Fig. 1 shows an exemplary configuration of an embodiment of a recording apparatus 10 to which an embodiment of the invention is adapted.

The recording apparatus 10 shown in Fig. 1 is configured of a tuner 11, an A/D (Analog/Digital) conversion circuit 12, a data compression circuit 13, a recording medium 14, a chapter point detection circuit 15, a CPU (Central Processing Unit) 16, a data decompression circuit 17, a D/A (Digital/Analog) conversion circuit 18, a monitor 19, and a speaker 20.

The tuner 11 demodulates the RF (Radio Frequency) signals of a television broadcast received through an antenna terminal, not shown, and supplies the resulted analog signals of video and sounds to the A/D conversion circuit 12. The A/D conversion circuit 12 converts the analog signals of video and sounds supplied from the tuner 11 into digital signals. The A/D conversion circuit 12 supplies video data that is the digital signals of the resulted video and audio data that is the digital signals of sounds to the data compression circuit 13 and the chapter point detection circuit 15.

The data compression circuit 13 compresses and encodes broadcast data formed of the video data and the audio data supplied from the A/D conversion circuit 12 in accordance with a predetermined system (for example, MPEG2 (Moving Picture Experts Group phase 2) system). Then, the data compression circuit 13 modulates the broadcast data after compressed and encoded in accordance with a predetermined modulation method (for example, EFM (Eight to Fourteen) modulation). The data compression circuit 13 supplies modulation signals obtained through modulation to the recording medium 14 such as a hard disk, an optical disk, a magneto-optical disk, a magnetic disk, and a semiconductor memory for recording.

The chapter point detection circuit 15 determines whether a television broadcast corresponding to the broadcast data formed of the video data and the audio data is a CM or a TV program from the characteristics of the video data and the audio data supplied from the A/D conversion circuit 12. The chapter point detection circuit 15 decides a chapter point indicating a CM reproduction start time or reproduction end time based on the determined result, and notifies the CPU 16.

The CPU 16 supplies the chapter point notified from the chapter point detection circuit 15 to the recording medium 14, and allows it to record the chapter point in association with the broadcast data. In addition, in the case in which a user turns on a CM skip function, in response to a reproduction instruction inputted by the user, the CPU 16 first controls the recording medium 14 to read the chapter points corresponding to the broadcast data to be a target for reproduction from the recording medium 14. Based on the chapter points, the CPU 16 then controls the recording medium 14 to read the broadcast data to be the target for reproduction so that CMs are reproduced in fast forward, and supplies the broadcast data to the data decompression circuit 17.

On the other hand, in the case in which a user turns off the CM skip function, in response to a reproduction instruction inputted by the user, the CPU 16 controls the recording medium 14 to read the broadcast data to be a target for reproduction from the recording medium, and supplies the broadcast data to the data decompression circuit 17.

The data decompression circuit 17 demodulates the broadcast data read from the recording medium 14 in accordance with a predetermined modulation method (for example, EFM demodulation). Then, the data decompression circuit 17 decodes the broadcast data after demodulated in accordance with a predetermined system (for example, MPEG2 system), and supplies the resulted broadcast data to the D/A conversion circuit 18.

The D/A conversion circuit 18 coverts the broadcast data that is digital signals into video signals and sound signals that are analog signals. Then, the D/A conversion circuit 18 supplies the video signals to the monitor 19 as well as supplies the sound signals to the speaker 20.

Based on the video signals supplied from the D/A conversion circuit 18, the monitor 19 displays thereon the video of the television broadcast. Based on the sound signals supplied from the D/A conversion circuit 18, the speaker 20 outputs the sounds of the television broadcast.

Fig. 2 shows an exemplary configuration of the detail of the chapter point detection circuit 15 shown in Fig. 1.

The chapter point detection circuit 15 shown in Fig. 2 is configured of a scene change detecting part 41, a black screen detecting part 42, a silence detecting part 43, a clock part 44, a potential chapter point detecting part 45, and a chapter point deciding part 46.

In addition, the video data supplied from the A/D conversion circuit 12 shown in Fig. 1 is supplied to the scene change detecting part 41 and the black screen detecting part 42. In addition, the audio data supplied from the A/D conversion circuit 12 is supplied to the silence detecting part 43.

The scene change detecting part 41 has a frame memory (not shown). The frame memory maintains therein one frame of video data supplied from the A/D conversion circuit 12. The scene change detecting part 41 compares the video data in units of frames supplied from the A/D conversion circuit 12 (hereinafter, referred to as current frame video data) with the video data in units of frames delayed by one frame time (in the case of NTSC (National Television Standards Committee) system, 1/30 seconds) by the frame memory (hereinafter, referred to as previous frame video data).

The scene change detecting part 41 detects a scene change in video, in the case in which a degree of changes from the previous frame video data to the current frame video data is a predetermined threshold or greater. In the case in which the scene change detecting part 41 detects a scene change, it outputs "1", for example, as information indicating that a scene change is detected to the potential chapter point detecting part 45, whereas in the case in which it detects no scene change, it outputs "0", for example, as information indicating that no scene change is detected to the potential chapter point detecting part 45.

The black screen detecting part 42 compares the mean value of the brightness level of the current frame video data in units of frames supplied from the A/D conversion circuit 12 with the threshold decided in advance. The black screen detecting part 42 detects that video of the current frame video data is a black screen, in the case in which the mean value is equal to or below the threshold. In the case in which the black screen detecting part 42 detects that the current frame video data is a black screen, it outputs "1", for example, as information indicating that a black screen is detected to the potential chapter point detecting part 45, whereas in the case in which it detects no black screen, it supplies "0", for example, as information indicating that no black screen is detected to the potential chapter point detecting part 45.

In addition, in the case in which black screens are continuously detected, the black screen detecting part 42 outputs "1" only for the first black screen to the potential chapter point detecting part 45. In addition, the mean value used for comparison by the black screen detecting part 42 is not restricted to the mean value in units of frames, which may be the mean value in any units.

The silence detecting part 43 compares the mean value in units of audio frames that is the absolute value of each level of the audio data on the left side and the audio data on the right side in the audio data supplied from the A/D conversion circuit 12 with the threshold.

In addition, the threshold is set by the silence detecting part 43 based on the minimum value of the level of the audio data supplied from the A/D conversion circuit 12, which is adaptively varied depending on the minimum value. For example, the threshold is set to a higher value at first, and then, in the case in which a minimum value of the level of the audio data supplied from the A/D conversion circuit 12 becomes smaller than that value, the threshold is made smaller depending on that value. Thus, regardless of countries or regions which broadcast television broadcasts, or the differences in the reception state of television broadcasts, the optimum threshold in accordance with the minimum value of the level of the audio data of a television broadcast can be set, and as the result, the silent section can be reliably detected.

For example, in the case in which the mean value in the audio data on the right and left side is smaller than the threshold, the silence detecting part 43 detects one audio frame time corresponding to the audio data as a silent section. Then, in the case in which the silence detecting part 43 detects a silent section, it outputs "1", for example, as information indicating that a silent section is detected to the potential chapter point detecting part 45, whereas in the case in which it detects no silent section, it outputs "0", for example, as information indicating that no silent section is detected to the potential chapter point detecting part 45.

In addition, the mean value used for the detection by the silence detecting part 43 is not restricted to the mean value in units of audio frames, which may be a mean value in any units.

The clock part 44 clocks a time period from the supply of the video data and the audio data from the A/D conversion circuit 12 to the current time, and supplies the time as a reproduction time instant to the potential chapter point detecting part 45.

Based on the value outputted from the scene change detecting part 41 or the value outputted from the black screen detecting part 42 and the value outputted from the silence detecting part 43, the potential chapter point detecting part 45 detects a potential chapter point to be possibly a chapter point.

More specifically, at least one of the cases in which the value outputted from the scene change detecting part 41 and the value outputted from the silence detecting part 43 are both "1", that is, in the case in which a scene change is detected in the silent section, or in which the value outputted from the black screen detecting part 42 and the value outputted from the silence detecting part 43 are both "1", that is, in the case in which a black screen is detected in the silent section, the potential chapter point detecting part 45 detects the reproduction time instant supplied from the clock part 44 as a potential chapter point. Then, the potential chapter point detecting part 45 supplies "1", for example, as information indicating that a potential chapter point is detected to the chapter point deciding part 46 together with the potential chapter point.

In addition, as described above, since the scene change detecting part 41 uses the previous frame video data to detect the scene change, the value indicating the detected result is outputted behind a single frame from the generation of the scene change.

Therefore, the value outputted from the silence detecting part 43 used for detecting the potential chapter point together with the value outputted from the scene change detecting part 41 is the value outputted a single frame earlier than the value outputted from the silence detecting part 43, which corresponds to the value outputted from the scene change detecting part 41.
In addition, the reproduction time instant indicated by the potential chapter point detected at this time is the time instant one frame time earlier than the reproduction time instant supplied from the clock part 44.

Based on the time period between the adjacent potential chapter points supplied from the potential chapter point detecting part 45, the chapter point deciding part 46 determines whether a television broadcast corresponding to the broadcast data between the potential chapter points is a CM or a TV program. Then, the chapter point deciding part 46 decides the potential chapter point indicating the reproduction time instant changed from one of a CM and a TV program to the other as a chapter point, and notifies the CPU 16 (Fig. 1) about the chapter point.

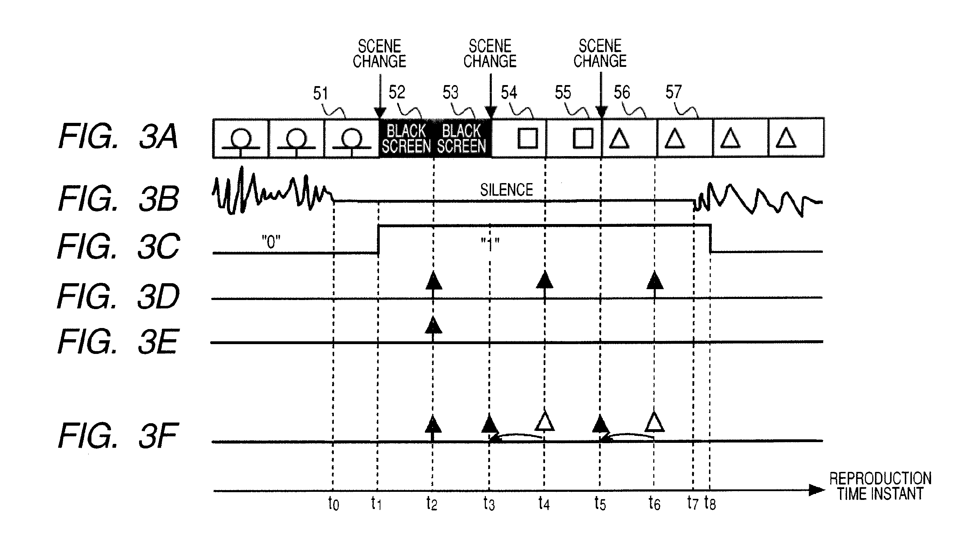

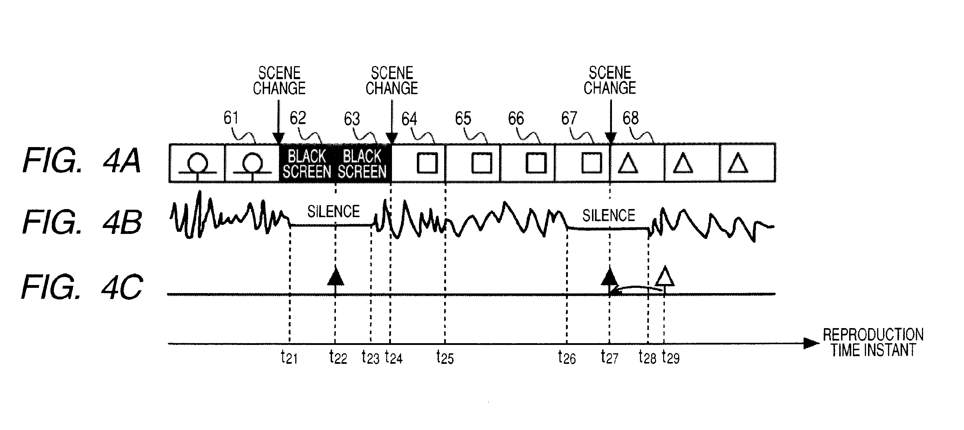

Next, the detection of the potential chapter point by the potential chapter point detecting part 45 will be described with reference to Figs. 3 and 4. In addition, in Figs. 3 and 4, the horizontal axis represents the reproduction time instant, and an upward arrow points that a detection is made by the scene change detecting part 41 or the black screen detecting part 42, or the potential chapter point detected by the potential chapter point detecting part 45.

In the case in which as shown in A in Fig. 3, in a television broadcast, a scene change is generated between a frame 51 and a frame 52 of the black screen, between a frame 53 of the black screen and a frame 54, and between frames 55 and 56, and as shown in B in Fig. 3, there is silence from a reproduction time instant to to a reproduction time instant t₇, as shown in C in Fig. 3, for example, a detection of a silent section is started at the reproduction time instant t₁ that is the end time of the frame 51 including the reproduction time instant to. Then, the detection of a silent section is finished at a reproduction time instant t₈ that is the end time of the frame 57 including the reproduction time instant t₇. In other words, a silent section is detected in units of frames from the reproduction time instants t₁ to t₇, and "1" is outputted to the potential chapter point detecting part 45 as information indicating that a silent section is detected.

In addition, as shown in D in Fig. 3, the scene change detecting part 41 uses the frame 52 of the black screen and the previous frame 51 to detect a scene change generated between the frames 51 and 52 at a reproduction time instant t₂ that is the end time of the frame 52, and outputs "1" to the potential chapter point detecting part 45 as information indicating that a scene change is detected.

Similarly, as shown in D in Fig. 3, the scene change detecting part 41 detects a scene change generated between the frames 53 and 54 at a reproduction time instant t₄ that is the end time of the frame 54, detects a scene change generated between the frames 55 and 56 at a reproduction time instant t₆ that is the end time of the frame 56, and then outputs "1" to the potential chapter point detecting part 45.

Moreover, although the black screen detecting part 42 detects that video of the current frame video data is a black screen at a reproduction time instant t₂ that is the end time of the frame 52 of the black screen and at the reproduction time instant t₃ that is the end time of the frame 53 of the black screen, the frames 52 and 53 of the black screen are contiguous. Thus, as shown in E in Fig. 3, the black screen detecting part 42 outputs "1" to the potential chapter point detecting part 45 as information indicating that a black screen is detected only at the reproduction time instant t₂ that is the end time of the head frame 52 of the black screen.

As discussed above, "1" is outputted to the potential chapter point detecting part 45 as a silent section, a scene change, or information indicating that a black screen is detected, and then as shown in F in Fig. 3, the potential chapter point detecting part 45 detects as a potential chapter point the reproduction time instant t₂ within the silent section at which a scene change or a black screen is detected first time.

More specifically, as described above, since "1" as information indicating that a scene change is detected is outputted behind a single frame, as shown in F in Fig. 3, the potential chapter point detecting part 45 first changes a reproduction time instant at which the scene change is detected from the reproduction time instants t₄ and t₆ at which "1" is outputted from the scene change detecting part 41 to the reproduction time instants t₃ and t₅ one frame time before.

Subsequently, based on the reproduction time instant t₁ at which "1" is started to output as information indicating that a silent section is detected, and the reproduction time instant t₈ at which the output is finished, and the reproduction time instants t₃ and t₅ after the change of a reproduction time instant at which the scene change is detected, or the reproduction time instant t₂ at which "1" is outputted as information indicating that a black screen is detected, the potential chapter point detecting part 45 detects the reproduction time instants t₂, t₃, and t₅ within the silent section at which a scene change or a black screen is detected to be possibly potential chapter points.

Then, the potential chapter point detecting part 45 detects the head reproduction time instant t₂ as a potential chapter point among the reproduction time instants t₂, t₃, and t₅ to be possibly potential chapter points.

In other words, in the case in which there is a plurality of reproduction time instants at which a scene change or a black screen is detected within a single silent section, the potential chapter point detecting part 45 detects all the reproduction time instants within the silent section as potential chapter points, which results in a plurality of potential chapter points at the start time or end time of a single CM corresponding to a single silent section. Then, when a plurality of potential chapter points exists at the start time or end time of a single CM, a problem arises that the chapter point deciding part 46 may not correctly detect whether a television broadcast corresponding to the broadcast data between the potential chapter points is a CM or a TV program based on the time period between the adjacent potential chapter points.

Therefore, the potential chapter point detecting part 45 detects only the head reproduction time instant t₂ as a potential chapter point at which a scene change or a black screen is detected within a single silent section. In addition, it is sufficient that a single potential chapter point is detected within a single silent section, and the detected potential chapter point is not limited to the head one.

In addition, in the case in which as shown in A in Fig. 4, in a television broadcast, a scene change is generated between a frame 61 and a frame 62 of the black screen, between a frame 63 of the black screen and a frame 64, and between frames 67 and 68, and as shown in B in Fig. 4, two sections are silence from a reproduction time instant t₂₁ to a reproduction time instant t₂₃, and from a reproduction time instant t₂₆ to a reproduction time instant t₂₈, as shown in C in Fig. 4, the reproduction time instant t₂₂ that is the end time of the frame 62 of the black screen and the reproduction time instant t₂₇ at which a scene change is generated are detected as potential chapter points.

More specifically, the silence detecting part 43 outputs "1" to the potential chapter point detecting part 45 from the reproduction time instant t₂₂ that is the end time of the frame 62 including the reproduction time instant t₂₁ to the reproduction time instant t24 that is the end time of the frame 63 including the reproduction time instant t₂₃, and from the reproduction time instant t₂₇ that is the end time of the frame 67 including the reproduction time instant t₂₆ to the reproduction time instant t₂₉ that is the end time of the frame 68 including the reproduction time instant t₂₈.

In addition, the scene change detecting part 41 detects a scene change generated between the frame 61 and the frame 62 of the black screen, between the frame 63 of the black screen and the frame 64, and between the frames 67 and 68 at the reproduction time instant t₂₂ that is the end time of the frame 62, t₂₅ that is the end time of the frame 64, and the reproduction time instant t₂₉ that is the end time of the frame 68, respectively, and outputs "1" to the potential chapter point detecting part 45.

Moreover, although the black screen detecting part 42 detects a black screen at the reproduction time instant t₂₂ that is the end time of the frame 62 of the black screen, and the reproduction time instant t₂₄ that is the end time of the frame 63 of the black screen, the frames 62 and 63 of the black screen are contiguous. Thus, the black screen detecting part 42 outputs "1" to the potential chapter point detecting part 45 only at the reproduction time instant t₂₂ that is the end time of the frame 62 of the head black screen.

Then, based on "1" outputted from the silence detecting part 43 and the scene change detecting part 41 or the black screen detecting part 42, the potential chapter point detecting part 45 detects as a potential chapter point at the head reproduction time instant t₂₂ at which a scene change or a black screen is detected within a time period from the reproduction time instants t₂₂ to t₂₄ at which a silent section is detected, and at the reproduction time instant t₂₇ a single frame before the reproduction time instant t₂₉ at which a scene change is detected within a time period from the reproduction time instants t₂₇ to t₂₉ at which a silent section is detected.

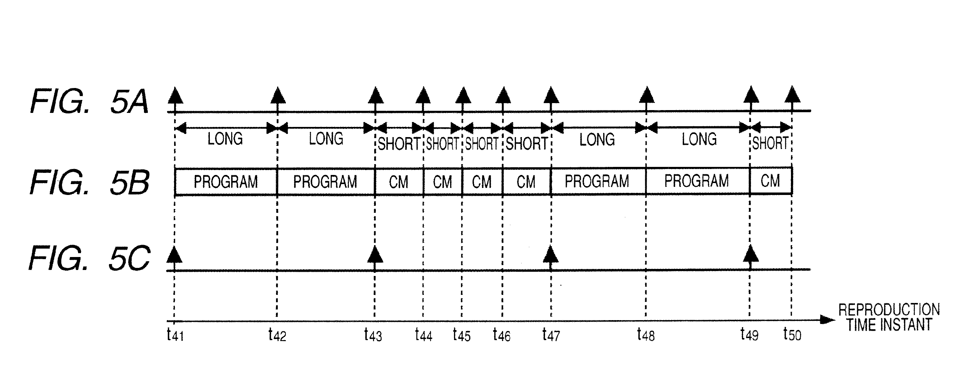

Next, the decision of the chapter point by the chapter point deciding part 46 will be described with reference to Fig. 5. In addition, in Fig. 5, the horizontal axis represents a reproduction time instant, and an upward arrow points a potential chapter point or a chapter point.

In the case in which as shown in A in Fig. 5, the reproduction time instants t₄₁ to t₅₀ are detected as a potential chapter point, the chapter point deciding part 46 determines whether a time period between two adjacent potential chapter points is longer than a predetermined time period set in advance (for example, 60 seconds). In addition, for a predetermined time period, any values can be set.

In the case in which the chapter point deciding part 46 determines that a time period between two adjacent potential chapter points is longer than a predetermined time period, it determines that the time period between the potential chapter points is longer, and determines that the television broadcast corresponding to the broadcast data between the potential chapter points is a TV program. On the other hand, in the case in which the chapter point deciding part 46 determines that a time period between two adjacent potential chapter points is equal to or shorter than a predetermined time period, it determines that the time period between the potential chapter points is shorter, and determines that the television broadcast corresponding to the broadcast data between the potential chapter points is a CM.

In the example shown in Fig. 5, as shown in A in Fig. 5, a time period between the reproduction time instants t₄₁ and t₄₂, a time period between the reproduction time instants t₄₂ and t₄₃, a time period between the reproduction time instants t₄₇ and t₄₈, and a time period between the reproduction time instants t₄₈ and t₄₉ are longer, which are the adjacent potential chapter points, and as shown in B in Fig. 5, the chapter point deciding part 46 determines that the television broadcast corresponding to broadcast data in these time periods is a TV program.

In addition, as shown in A in Fig. 5, a time period between the reproduction time instant t₄₃ and t₄₄, a time period between the reproduction time instant t₄₄ and t₄₅, a time period between the reproduction time instant t₄₅ and t₄₆, a time period between the reproduction time instant t₄₆ and t₄₇, and a time period between the reproduction time instant t₄₉ and t₅₀ are shorter, which are the adjacent potential chapter points, and as shown in B in Fig. 5, the chapter point deciding part 46 determines that the television broadcast corresponding to broadcast data in these time periods is a CM.

Subsequently, the chapter point deciding part 46 decides the potential chapter point indicating the reproduction time instant changed from one of a TV program and a CM to the other as the chapter point. More specifically, as shown in C in Fig. 5, the chapter point deciding part 46 decides as the chapter point the potential chapter point indicating the reproduction time instants t₄₃ and t₄₉ changed from a TV program to a CM, and the potential chapter point indicating the reproduction time instant t₄₇ changed from a CM to a TV program. In addition, the chapter point deciding part 46 also decides the head reproduction time instant t₄₁ of a television broadcast as a chapter point.

As discussed above, since the chapter point deciding part 46 decides the potential chapter point indicating the reproduction time instant changed from one of a TV program and a CM to the other as the chapter point, such an event can be prevented that a chapter point is wrongly set at the reproduction time instant during a TV program or during a CM, and a chapter point can be reliably set at the reproduction start time or the reproduction end time of a CM.

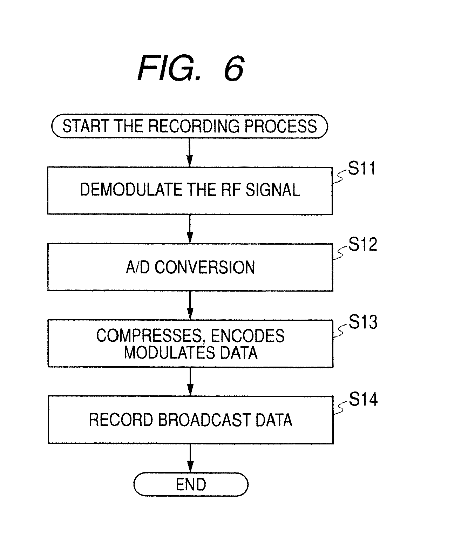

Next, a recording process in the recording apparatus 10 shown in Fig. 1 will be described with reference to Fig. 6. For example, the recording process is started when the antenna terminal, not shown, receives an RF signal of a television broadcast to be a target for recording.

In Step S11, the tuner 11 demodulates the RF signals of the television broadcast received through the antenna terminal, not shown, and supplies the resulted analog signals of video and sounds to the A/D conversion circuit 12. In Step S12, the A/D conversion circuit 12 applies A/D conversion to the analog signals of video and sounds supplied from the tuner 11, and supplies the resulted video data and audio data to the data compression circuit 13 and the chapter point detection circuit 15.

In Step S13, the data compression circuit 13 compresses and encodes the video data and the audio data supplied from the A/D conversion circuit 12 in accordance with a predetermined system, and modulates the data in accordance with a predetermined modulation method. The data compression circuit 13 supplies the modulation signals of the resulted broadcast data to the recording medium 14. In Step S14, the recording medium 14 records thereon the modulation signals of the broadcast data supplied from the data compression circuit 13, and the process is ended.

Next, a potential chapter point detecting process in the chapter point detection circuit 15 shown in Fig. 2 will be described with reference to Fig. 7. For example, the potential chapter point detecting process is the process in Step S12 shown in Fig. 6, and is started when video data and audio data are supplied from the A/D conversion circuit 12 shown in Fig. 1 to the chapter point detection circuit 15.

In Step S21, the scene change detecting part 41 determines whether a scene change is generated, that is, a degree of changes from the previous frame video data to the current frame video data is a predetermined threshold or greater. If it is determined that a scene change is generated in Step S21, in Step S22, the scene change detecting part 41 detects a scene change, and outputs "1" indicating that a detection is made, which is the detected result, to the potential chapter point detecting part 45.

On the other hand, if it is determined that no scene change is generated in Step S21, in Step S23, the scene change detecting part 41 detects no scene change, outputs "0" indicating that no detection is made, which is the detected result, to the potential chapter point detecting part 45.

After the process in Step S22 or S23, in Step S24, the black screen detecting part 42 determines whether the video of the current frame video data is a black screen, that is, the mean value of the brightness level of the current frame video data in units of frames is equal to or below the threshold. If it is determined that the video of the current frame video data is a black screen in Step S24, in Step S25, the black screen detecting part 42 detects that video of the current frame video data is a black screen, and outputs "1" indicating that a detection is made, which is the detected result, to the potential chapter point detecting part 45.

On the other hand, if it is determined that the video of the current frame video data is not a black screen in Step S24, in Step S26, the black screen detecting part 42 does not detect that video of the current frame video data is a black screen, and outputs "0" indicating that no detection is made, which is the detected result, to the potential chapter point detecting part 45.

After the process in Step S25 or S26, in Step S27, it is determined whether the sounds of the audio data supplied from the A/D conversion circuit 12 are silence, that is, the mean value in units of audio frames of the absolute value of each level of the audio data on the left side and the audio data on the right side is smaller than the threshold in the audio data supplied from the A/D conversion circuit 12.

If it is determined that the sounds are silence in Step S27, in Step S28, the silence detecting part 43 detects one audio frame time corresponding to the sounds as a silent section, and outputs "1" indicating that a detection is made, which is the detected result, to the potential chapter point detecting part 45.

On the other hand, if it is determined that the sounds are not silence in Step S27, in Step S29, the silence detecting part 43 does not detect one audio frame time corresponding to the sounds as a silent section, and outputs "0" indicating that no detection is made, which is the detected result, to the potential chapter point detecting part 45.

After the process in Step S28 or S29, in Step S30, the potential chapter point detecting part 45 detects a reproduction time instant within the silent section at which a scene change or a black screen is detected first time as a potential chapter point based on the value outputted from the scene change detecting part 41, or the value outputted from the black screen detecting part 42, and the value outputted from the silence detecting part 43. Then, the potential chapter point detecting part 45 supplies the potential chapter point to the chapter point deciding part 46, and the process is ended.

Next, a chapter point deciding process in the recording apparatus 10 shown in Fig. 1 will be described with reference to Fig. 8. For example, the chapter point deciding process is started when the video data and the audio data are supplied from the A/D conversion circuit 12 shown in Fig. 1 to the chapter point detection circuit 15.

In Step S41, the chapter point deciding part 46 sets to zero a previous potential chapter point R that is maintained in a register incorporated therein (not shown) and is a potential chapter point one point before the potential chapter point to be a current potential chapter point PTS in Step S45, described later.

In Step S42, the chapter point deciding part 46 resets a current mode M2 that is a mode indicating whether a television broadcast corresponding to broadcast data between the current potential chapter point PTS and the previous potential chapter point R is a CM or a TV program, and resets a previous mode M1 that is a mode one mode before. In other words, the chapter point deciding part 46 sets the current mode M2 and the previous mode M1 to zero.

In Step S43, the chapter point deciding part 46 sets to 60 seconds a set time T that is maintained in the register incorporated therein for use in the determination in Step S45, described later. In Step S44, the chapter point deciding part 46 determines whether a new potential chapter point is supplied from the potential chapter point detecting part 45 in Step S30 shown in Fig. 7.

In Step S44, if it is determined that no new potential chapter point is supplied, the process skips Steps S45 to S52, and goes to Step S53. On the other hand, in Step S44, if it is determined that a new potential chapter point is supplied, in Step S45, the chapter point deciding part 46 considers the potential chapter point to be the current potential chapter point PTS, and determines whether a subtracted value that the previous potential chapter point R is subtracted from the current potential chapter point PTS is equal to or below the set time T.

In Step S45, if it is determined that the subtracted value is not equal to or below the set time T, that is, the subtracted value is longer than the set time T, in Step S46, the chapter point deciding part 46 sets the current mode M2 maintained in the register incorporated therein to a TV program mode indicating that it is a TV program. For example, the chapter point deciding part 46 sets the current mode M2 to "0" as information indicating that it is a TV program mode.

On the other hand, if it is determined that the subtracted value is equal or below the set time T in Step S45, in Step S47, the chapter point deciding part 46 sets the current mode M2 maintained in the register incorporated therein to a CM mode indicating that it is a CM. For example, the chapter point deciding part 46 sets the current mode M2 to "1" as information indicating that it is a CM mode.

After the process in Step S46 or S47, in Step S48, the chapter point deciding part 46 determines whether the current mode M2 and the previous mode M1 are different from each other. In Step S48, if it is determined that the current mode M2 and the previous mode M1 are different from each other, that is, if the previous potential chapter point R indicates a reproduction time instant changed from one of a CM and a TV program to the other, in Step S49, the chapter point deciding part 46 decides the previous potential chapter point R as the chapter point, and notifies the CPU 16.

In Step S50, the CPU 16 records the chapter point supplied from the chapter point deciding part 46 on the recording medium 14 in association with the broadcast data. In Step S51, the chapter point deciding part 46 alters the previous potential chapter point R maintained in the register incorporated therein to the current potential chapter point PTS.

In Step S52, the previous mode M1 maintained in the register incorporated therein is altered to the current mode M2, and the process goes to Step S53. In Step S53, the chapter point deciding part 46 determines whether the recording is finished, that is, the supply of the video data and the audio data from the A/D conversion circuit 12 is stopped. If it is determined that the recording is not finished yet, the process returns to Step S44, and the process steps described above are repeated. In Step S53, if it is determined that the recording is finished, the process is ended.

As discussed above, the chapter point deciding part 46 uses a more universal characteristic that a CM duration is shorter than a TV program duration, and then determines whether the television broadcast corresponding to the broadcast data between the potential chapter points is a TV program or a CM, depending on whether a time period between the potential chapter points is longer than the set time T. Thus, an optimum time is set as the set time T, whereby the determination can be made adequately. Therefore, a potential chapter point changed from one of a TV program and a CM to the other can be decided correctly as the chapter point.

Consequently, a user turns on the CM skip function to instruct reproduction, whereby the recording apparatus 10 can correctly reproduce the CM portion in fast forward, and the user demand can be satisfied that it is desired to readily watch only a TV program.

In addition, in the discussion described above, the black screen detecting part 42 detects a black screen, but it may detect a blue screen. In addition, in the case in which the black screens are continuously detected, the black screen detecting part 42 may output "1" to the potential chapter point detecting part 45 for all the black screens as well as the first black screen.

In addition, for example, in the case in which the recording apparatus 10 shown in Fig. 1 receives digital television broadcasts by IPTV (Internet Protocol Television), it may not have the tuner 11. Moreover, the chapter point detection circuit 15 shown in Fig. 2 may have any one of the scene change detecting part 41 and the black screen detecting part 42.

A sequence of the process steps described above may be executed by hardware, or may be executed by software. In the case in which a series of the process steps is executed by software, a program configuring the software is installed in a computer incorporated in a dedicated hardware, or is installed from a program recording medium to a multi-purpose personal computer, for example, that can run various functions by installing various programs.

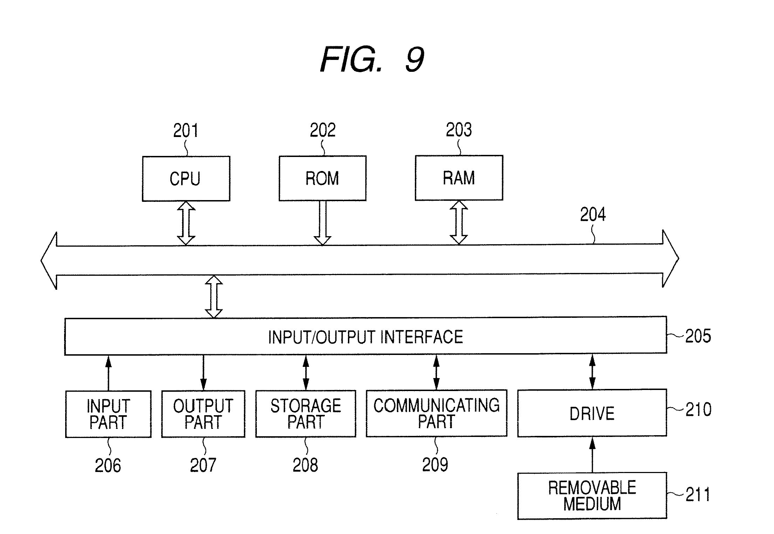

Fig. 9 shows a block diagram depicting an exemplary hardware configuration of a computer that runs a sequence of process steps described above by a program.

In the computer, a CPU (Central Processing Unit) 201, a ROM (Read Only Memory) 202, and a RAM (Random Access Memory) 203 are connected to each other through a bus 204.

To the bus 204, an input/output interface 205 is further connected. To the input/output interface 205, the following are connected: an input part 206 that is formed of a keyboard, a mouse, a microphone, and a receiving part that receives an instruction sent from a remote controller; an output part 207 that is formed of a display and a speaker; a storage part 208 that is formed of a hard disk and a non-volatile memory; a communicating part 209 formed of a network interface; and a drive 210 that drives a removable medium 211 such as a magnetic disk, an optical disk, a magneto-optical disk, or a semiconductor memory.

In the computer thus configured, for example, the CPU 201 loads the program stored in the storage part 208 to the RAM 203 through the input/output interface 205 and the bus 204, and then runs it for performing the sequence of the process steps described above.

For example, the program run by the CPU 201 of the computer is offered by recording it on the removable medium 211 that is a package medium such as a magnetic disk (including a flexible disk), an optical disk (CD-ROM (Compact Disc-Read Only Memory), and a DVD (Digital Versatile Disc)), a magneto-optical disk, or a semiconductor memory, or through a wireless or cable transmission medium such as a local area network, the Internet, and digital satellite broadcasting.

Then, the program can be installed on the storage part 208 through the input/output interface 205 by mounting the removable medium 211 on the drive 210. In addition, the program can be received by the communicating part 209 through a wireless or cable transmission medium, and installed on the storage part 208. In addition to these, the program can be installed on the ROM 202 or the storage part 208 in advance.

In addition, the program run by the computer may be a program in which the process steps are preformed in a time series in order described in the specification, or may be a program in which the process steps are preformed at a necessary timing such as in parallel, or when called.

Moreover, the embodiment of the invention is not limited to the embodiments described above, which can be modified within the scope not deviating from the teaching of an embodiment of the invention.

It should be understood by those skilled in the art that various modifications, combinations, sub-combinations and alterations may occur depending on design requirements and other factors insofar as they are within the scope of the appended claims or the equivalents thereof.

## Claims

1. An information processing apparatus that detects a commercial included in a television broadcast, the information processing apparatus comprising:
a silent section detecting part configured to detect a silent section of the television broadcast;
a scene change detecting part configured to detect a scene change of video of the television broadcast;
a black screen/blue screen detecting part configured to detect that video of the television broadcast is a black screen or a blue screen;
a potential chapter point detecting part configured to detect a potential chapter point to be possibly a chapter point indicating a reproduction start time or a reproduction end time of the commercial based on at least one of a detected result done by the silent section detecting part, a detected result done by the scene change detecting part and a detected result done by the black screen/blue screen detecting part; and
a deciding part configured to determine whether a television broadcast between the potential chapter points is the commercial or a TV program based on the potential chapter points, and to decide a potential chapter point indicating a reproduction time instant changed from one of the commercial and the TV program to the other as the chapter point in the potential chapter points.

2. The information processing apparatus according to claim 1,
wherein the potential chapter point detecting part detects a reproduction time instant within the silent section at which the scene change is detected as the potential chapter point.

3. The information processing apparatus according to claim 2,
wherein when a plurality of reproduction time instants at which the scene change is detected exists within the single silent section, the potential chapter point detecting part detects a single reproduction time instant in the plurality of the reproduction time instants as the potential chapter point.

4. The information processing apparatus according to any of claims 1 to 3,
wherein the potential chapter point detecting part detects a reproduction time instant within the silent section at which the black screen or the blue screen is detected as the potential chapter point.

5. The information processing apparatus according to claim 4,
wherein when a plurality of reproduction time instants at which the black screen or the blue screen is detected exists within the single silent section, the potential chapter point detecting part detects a single reproduction time instant in the plurality of the reproduction time instants as the potential chapter point.

6. The information processing apparatus according to claim 4,
wherein the potential chapter point detecting part further detects a reproduction time instant within the silent section at which the scene change is detected as the potential chapter point.

7. The information processing apparatus according to claim 6,
wherein when a plurality of reproduction time instants at which the black screen or the blue screen is detected or a plurality of reproduction time instants at which the scene change is detected exist within a single silent section, the potential chapter point detecting part detects a single reproduction time instant in the pluralities of the reproduction time instants as the potential chapter point.

8. The information processing apparatus according to any of claims 1 to 7,
wherein when a time period between the potential chapter points is longer than a predetermined time period, the deciding part determines that a television broadcast between the potential chapter points is the TV program, whereas when a time period between the potential chapter points is equal to or shorter than a predetermined time period, the deciding part determines that a television broadcast between the potential chapter points is the commercial.

9. The information processing apparatus according to any of claims 1 to 8,
wherein the silent section detecting part uses a threshold corresponding to a sound level of the television broadcast, and detects a section with a sound level smaller than the threshold as the silent section.

10. The information processing apparatus according to claim 9,
wherein the silent section detecting part sets the threshold based on a minimum value of the sound level of the television broadcast.

11. An information processing method of an information processing apparatus that detects a commercial included in a television broadcast, the method comprising the steps of:
detecting a silent section of the television broadcast;
detecting a scene change of video of the television broadcast;
detecting that video of the television broadcast is a black screen or a blue screen;
detecting a potential chapter point to be possibly a chapter point indicating a reproduction start time or a reproduction end time of the commercial based on at least one of a detected result of the silent section, a detected result of the scene change and a detected result of the black screen or the blue screen; and
determining whether a television broadcast between the potential chapter points is the commercial or a TV program based on the potential chapter points, and deciding a potential chapter point indicating a reproduction time instant changed from one of the commercial and the TV program to the other as the chapter point in the potential chapter points.

12. A program that allows a computer to execute a process of detecting a commercial included in a television broadcast, the detecting process comprising the steps of:
detecting a silent section of the television broadcast;
detecting a scene change of video of the television broadcast;
detecting that video of the television broadcast is a black screen or a blue screen;
detecting a potential chapter point to be possibly a chapter point indicating a reproduction start time or a reproduction end time of the commercial based on at least one of a detected result of the silent section, a detected result of the scene change and a detected result of the black screen or the blue screen; and
determining whether a television broadcast between the potential chapter points is the commercial or a TV program based on the potential chapter points, and deciding a potential chapter point indicating a reproduction time instant changed from one of the commercial and the TV program to the other as the chapter point in the potential chapter points.

13. A recording medium on which the program according to claim 12 is recorded.
